# EUROPÄISCHE PATENTSCHRIFT

(11) **EP 2 489 979 B1**
(45) Veröffentlichungstag und Bekanntmachung des Hinweises auf die Patenterteilung: **05.06.2013**
(21) Anmeldenummer: 11001378.6
(22) Anmeldetag: 19.02.2011
(51) Int. Cl.: G01B 11/12

(54) **Verfahren zur Erkennung und Vermessung von zylindrischen Oberflächen an feuerfesten keramischen Bauteilen in metallurgischen Anwendungen**
Method for detecting and measuring cylindrical surfaces on fire-proof ceramic components in metallurgical applications
Procédé de reconnaissance et de mesure de surfaces cylindriques sur des composants céramiques ignifuges dans des applications métallurgiques

(43) Veröffentlichungstag der Anmeldung: 22.08.2012
(73) Patentinhaber: Refractory Intellectual Property GmbH & Co. KG, 1100 Wien (AT)
(72) Erfinder: Paul, Günther, 8784 Trieben (AT)
(74) Vertreter: Becker, Thomas

(56) Entgegenhaltungen:
- US-B1- 6 482 148
- US-B1- 6 697 164
- US-B1- 6 885 464

## Beschreibung

Die Erfindung betrifft ein Verfahren zur Erkennung und Vermessung von zylindrischen Oberflächen an feuerfesten keramischen Bauteilen in metallurgischen Anwendungen.

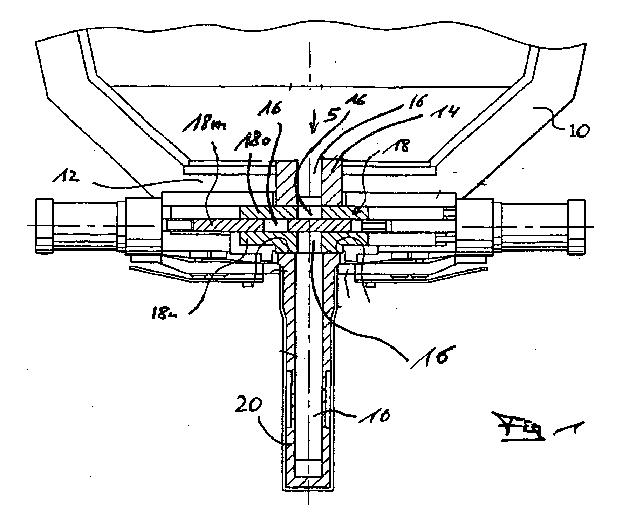

Figur 1 zeigt eine typische metallurgische Anwendung, ohne diese im Rahmen der Erfindung zu beschränken. Zu erkennen ist ein metallurgisches Gefäß 10 mit einem feuerfest ausgekleideten Boden 12, in dem ein im Wesentlichen zylinderförmiger feuerfester keramischer Ausguss 14 angeordnet ist, der eine mittlere Durchflussöffnung 16 aufweist, durch die eine Metallschmelze aus dem metallurgischen Gefäß 10 in nachgeordnete Aggregate fließt.

Dabei folgt dem Ausguss 14, in Strömungsrichtung der Schmelze (Pfeil S) ein Schieberverschluss 18 mit einer oberen Schieberplatte 18o, einer mittleren Schieberplatte 18m und einer unteren Schieberplatte 18u, an die sich ein Tauchausguss 20 anschließt. Alle vorgenannten Bauteile weisen Durchflussöffnungen für die Metallschmelze auf, korrespondierend zum Durchflusskanal 16, weshalb die entsprechenden Abschnitte in Figur 1 ebenfalls mit 16 gekennzeichnet sind.

Aus Figur 1 ergibt sich, dass die mittlere Schieberplatte 18m verschiebbar ist, um von einer Absperrposition (Figur 1) in eine Position gebracht zu werden, bei der alle Durchflussöffnungen 16 hintereinander liegen und den Durchfluss der Metallschmelze erlauben.

Die vorgenannten Bauteile (Ausguss 14, Schieberplatten 18o, 18m, 18u, Tauchausguss 20) weisen zylindrische innere Oberflächen zur Begrenzung der jeweiligen Durchflussöffnung 16 auf. Der Begriff "zylindrisch" ist dabei nicht im exakten mathematischen Sinne zu verstehen, sondern unter technischen Gesichtspunkten.

Es ist bekannt, dass die feuerfesten Bauteile durch den metallurgischen Angriff der Schmelze verschleißen (erodieren) oder umgekehrt, dass sich Aufwachsungen auf den Oberflächen bilden (so genanntes clogging).

Sowohl Verschleißerscheinungen als auch ein Aufwuchs auf den Oberflächen der Durchgangskanäle 16 stört den Gießvorgang erheblich. Es ist deshalb regelmäßig notwendig, Kenntnisse über die Geometrie der Durchgangskanäle 16 zu haben, um entsprechende Konsequenzen ziehen zu können, beispielsweise den Austausch eines bereits übermäßig verschlissenen Bauteils oder das Ausbrennen/Abschlagen von Aufwachsungen im Durchgangskanal.

Aufgrund der hohen Temperaturen der entsprechenden Bauteile, die auch nach Abschluss einer Gießsequenz noch lange Zeit mehrere 100 Grad betragen können, ergeben sich Schwierigkeiten bei der Überprüfung der entsprechenden Oberflächen.

Eine visuelle Beurteilung mit dem Auge ist extrem ungenau und nur auf erhebliche Entfernung möglich. Man hat deshalb versucht, mittels Haken die entsprechenden Oberflächen abzutasten. Auch dabei ergeben sich nur sehr ungenaue Ergebnisse. Häufig wird deshalb auf Erfahrungswerte zurückgegriffen, was in vielen Fällen zu völlig falschen Ergebnissen führt.

Die US 6,482,148 B1 betrifft eine optische Messeinrichtung zur Fernüberwachung (remote) oder an nicht zugänglichen Stellen. Die Messeinrichtung umfasst ein Rohr, in dem verschiedene Lichtquellen, Spiegel und andere Bauteile angeordnet sind.

Aufgabe der Erfindung ist es, eine Möglichkeit aufzuzeigen, zylindrische Oberflächen an feuerfesten keramischen Bauteilen in metallurgischen Anwendungen sicher erkennen und vermessen zu können. Es sollen zuverlässige Daten zur Verfügung stehen, um beurteilen zu können, ob beziehungsweise welche Maßnahmen gegebenenfalls notwendig sind, um das betroffene Bauteil zu reparieren oder auszutauschen.

Die Erfindung sieht dazu ein Verfahren mit einer Vorrichtung vor, die den Grundgedanken eines Endoskops aufnimmt, diesen aber in Bezug auf die spezifische Anwendung innovativ anpasst. Der Grundgedanke der Erfindung besteht zunächst darin, die zugehörige Vorrichtung so auszubilden, dass sie einen "kalten
Teil" und einen "heißen Teil" aufweist. Der "heiße Teil" ist dazu gedacht, in den Bereich des zu prüfenden Bauteils gebracht zu werden, um entsprechend "vor Ort" die gewünschte Inspektion durchzuführen. Der "kalte Teil" wird in deutlichem Abstand dazu platziert, und zwar in einem Bereich, bei dem deutlich geringere Temperaturen herrschen, beispielsweise Raumtemperatur.

Entsprechend können in dem "kalten Teil" empfindliche Messvorrichtungen wie Kameras installiert werden, während der "heiße Teil" vorzugsweise nur dazu genutzt wird, Messstrahlen an die zu prüfenden Oberflächen zu führen.

Vor diesem Hintergrund basiert die Erfindung weiters auf der Überlegung, eine Kamera vorzusehen, die bestimmte Teile der zylindrischen Oberfläche des zu prüfenden Bauteils erfasst und zusätzlich eine Abstandsmessung vorzunehmen, so dass sich aus beiden Informationen gemeinsam ein dreidimensionales Bild der zu überprüfenden Oberfläche bestimmen lässt.

In ihrer allgemeinsten Ausführungsform betrifft die Erfindung ein Verfahren mit den Merkmalen des Patentanspruchs 1.

Mit der Kamera erfolgt also eine optische Betrachtung einer bestimmten Oberfläche, mit der Einrichtung zur Abstandsmessung eine Beurteilung über den Abstand des entsprechenden Flächenabschnittes zu einem Bezugspunkt, beispielsweise der Mittenlängsachse des Messrohrs.

Die Kamera ist beispielsweise so angeordnet, dass die Richtung der zugehörigen Brennweite koaxial zur Mittenlängsachse des Messrohres verläuft. Die Reflektionsfläche dient dazu, den radial mit Abstand zur Mittenlängsachse verlaufenden Oberflächenabschnitt des keramischen Bauteils optisch mit der Kamera zu erfassen. Insoweit ist auch der der Reflektionsfläche gegenüberliegende Abschnitt des Messrohres lichtdurchlässig, beispielsweise offen.

Aus der genannten Anordnung ergibt sich, dass die Reflektionsfläche vorzugsweise unter einem Winkel von etwa 45° zur Mittenlängsachse des Messrohres verläuft, wobei größere oder kleinere Winkel (45 +/- 10°) ebenso möglich sind. Die Winkelangaben beziehen sich auf die Hauptrichtung der zugehörigen Lichtwellen. Insoweit sind die Winkelangaben wiederum nicht exakt mathematisch, sondern technisch zu verstehen.

Dies gilt insbesondere dann, wenn die Reflektionsfläche nicht plan ist, sondern gewölbt, um größere oder kleinere Oberflächenabschnitte des feuerfesten Bauteils erfassen zu können.

Nach einer Ausführungsform umfasst die Einrichtung zur Abstandsmessung einen Laser oder eine Diode, der/die einen optischen Strahl auf einen im Messrohr angeordneten Spiegel richtet, der den Strahl durch den lichtdurchlässigen Umfangsabschnitt des Messrohres hindurch auf den von der Kamera erfassten Teil der zylindrischen Oberfläche des keramischen Bauteils lenkt.

Für diesen Spiegel gelten die vorstehenden Ausführungen zur Reflektionsfläche analog.

Dabei ist jedoch zu berücksichtigen, dass der Spiegel beabstandet zur Reflektionsfläche verlaufen kann. Dabei ist insbesondere eine Anordnung vorgesehen, bei der der Spiegel in Axialrichtung des Messrohrs vor der Reflektionsfläche angeordnet ist, und zwar beispielsweise wandseitig, also im Bereich der Innenwand des Messrohres. Die Laserquelle kann dabei so angeordnet sein, dass der Strahl parallel im Abstand zur Innenwand des Messrohrs verläuft, bevor er auf den Spiegel trifft.

Bei dieser Anordnung wird der Neigungswinkel des Spiegels entsprechend geringer als der der Reflektionsfläche sein, wenn der reflektierte Lichtstrahl etwa mittig auf den von der Kamera erfassten Oberflächenabschnitt des keramischen Bauteils treffen soll, was vorteilhaft ist, um korrespondierende Daten zu erhalten. Insoweit beträgt der Winkel des Spiegels beispielsweise 10 bis 30° in Bezug auf die Mittenlängsachse des Messrohrs.

Das Messrohr ist beispielsweise zylindrisch. Andere Geometrien sind jedoch ebenfalls möglich.

Die Reflektionsfläche und/oder der Spiegel können auf ihrer optischen Seite mit einer hitzebeständigen Beschichtung ausgebildet sein, um auch über längere Messzeiten nicht durch die hohen Temperaturen im Bereich der Messstelle beschädigt zu werden. Eine solche mögliche Beschichtung besteht aus Chrom. Eine verchromte Oberfläche kann beispielsweise 400 bis 500° C ohne weiteres langfristig widerstehen.

Aus der vorstehenden Beschreibung wird deutlich, dass die verwendete Vorrichtung regelmäßig nur einen Teil der zylindrischen Oberfläche des zu prüfenden Bauteils optisch erfassen kann. Insoweit sieht eine Ausführungsform vor, dass das Messrohr zumindest in dem Bereich, in dem die Reflektionsfläche und ein etwaiger Spiegel angeordnet sind, drehbar und/oder axial verschiebbar ausgebildet ist. Dies ermöglicht es, entweder kontinuierlich oder sequenzweise beliebige Teilflächen der Zylinderoberfläche des Bauteils zu erfassen (abzurastern) und entsprechend zu vermessen.

Die Drehung des Messrohres erfolgt vorzugsweise um die Mittenlängsachse. Ohne weiteres kann auch das gesamte Messrohr, einschließlich zugehöriger Einrichtungen wie Kameras und Laser, gedreht werden.

Es ist gut, wenn das Messrohr zumindest in dem Bereich, in dem die Reflektionsfläche und ein etwaiger Spiegel angeordnet sind, thermisch isoliert wird, um Temperaturen bis beispielsweise 800° C zu widerstehen. Diese Isolierung kann eine Mineralfaserisolierung sein, die hinter den Spiegeln/Reflektionsflächen, oder anders ausgedrückt: zwischen den nicht optischen Seiten der Reflektionsfläche/des Spiegels und der Innenwand des Messrohres angeordnet ist.

Die Auswertung der von der Kamera aufgenommenen Bilder sowie der Daten der Abstandsmessung kann manuell, vorzugsweise aber elektronisch erfolgen. Dazu sieht eine Ausbildung der Erfindung vor, die Vorrichtung mit einer Speichereinheit auszubilden, auf der die von der Kamera und der Einrichtung zur Abstandsmessung empfangenen Bilder und Daten erfasst werden. Diese können dann in einer Auswerteeinheit ausgewertet werden.

Ergibt sich dabei beispielsweise, dass der Verschleiß im Bereich einer Durchflussöffnung einer Schieberplatte ein gewisses Maß überschritten hat, ergibt sich daraus unmittelbar die Notwendigkeit, die betroffene Schieberplatte auszutauschen. Damit erfüllt das erfindungsgemäße Verfahren einen wichtigen Sicherheitsaspekt nicht nur im Zusammenhang mit der Nutzung der Schieberplatte, sondern auch in Bezug auf die gesamte Anlage, um beispielsweise einen Schmelzendurchbruch zu verhindern.

Im Rahmen des Verfahrens kann die Vorrichtung mobil eingesetzt werden. Ebenso ist es möglich, sie mittels einer Einrichtung an einem metallurgischen Gefäß zu fixieren, so dass die empfangenen Bilder und Daten auf definierte Bezugsgrößen erfasst werden.

Die Erfindung wird nachstehend näher erläutert.

Dabei zeigen:
- Figur 2:: Eine Seitenansicht einer Vorrichtung zur Erfassung und Messung einer Durchflussöffnung einer Schieberplatte.
- Figur 3:: Eine vergrößerte Darstellung des Abschnittes der Vorrichtung gemäß Figur 1 im Bereich der Schieberplatte.

Die Figuren zeigen ein zylindrisches Messrohr 30 mit einem ersten Ende 32, dem so genannten "kalten Ende" und einem zweiten Ende 34, dem so genannten "heißen Ende".

Am ersten Ende 32 ist das Messrohr 30 erweitert und nimmt in diesem Abschnitt eine Kamera 38 auf, hier eine Spiegelreflexkamera.

Die Kamera 38 ist in Richtung auf eine Reflektionsfläche 40 ausgerichtet, die sich innerhalb des zweiten Endes 34 des Messrohres 30 befindet und dort in einem Winkel von 45° zur Mittenlängsachse A des Messrohres 30 verläuft.

Das Messrohr 30 weist im benachbarten Wandabschnitt eine korrespondierende Öffnung 42 auf, so dass mittels der Kamera 38 über die Reflektionsfläche 40 ein Teil einer zylindrischen Oberfläche 18o einer Schieberplatte 18 erfassbar ist.

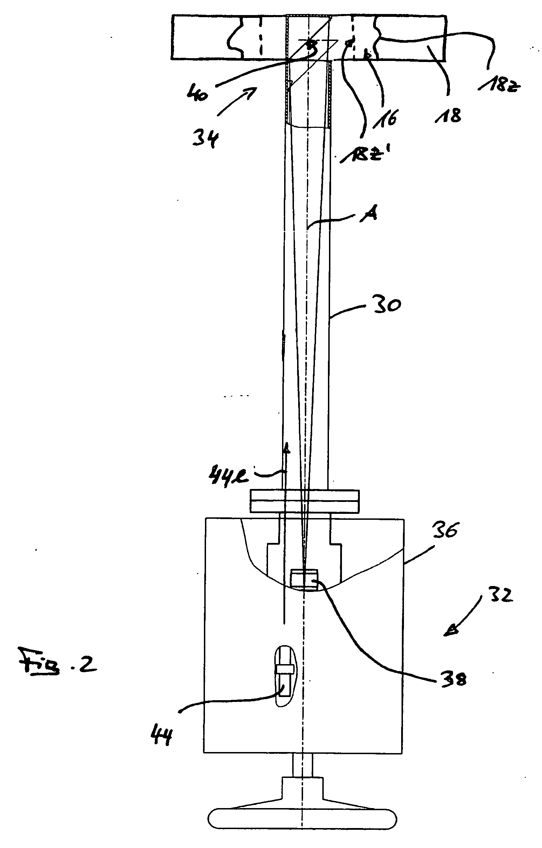

In Figur 2 ist der Verlauf der zylindrischen Oberfläche einer neuen Schieberplatte gestrichelt dargestellt (18z'), während die durchgezogene Linie (18z) einen beispielhaften Verschleißzustand anzeigt, der mit der Vorrichtung bei der Anwendung des erfindungsgemäßen Verfahrens erfasst und bewertet werden soll.

Durch Einstellung der Brennweite der Kamera 38 auf die Reflektionsfläche 40 lässt sich also ein in radialem Abstand zum Messrohr 30 verlaufender Teil der Oberfläche 18z der Schieberplatte 18 optisch erfassen und betrachten. Diese Aussage allein ist aber nicht ausreichend, den Verschleißgrad der Schieberplatte 18 zu bestimmen, da der Abstand der ursprünglichen Oberfläche zur verschlissenen Oberfläche mittels der Kamera 38 nicht bestimmt werden kann.

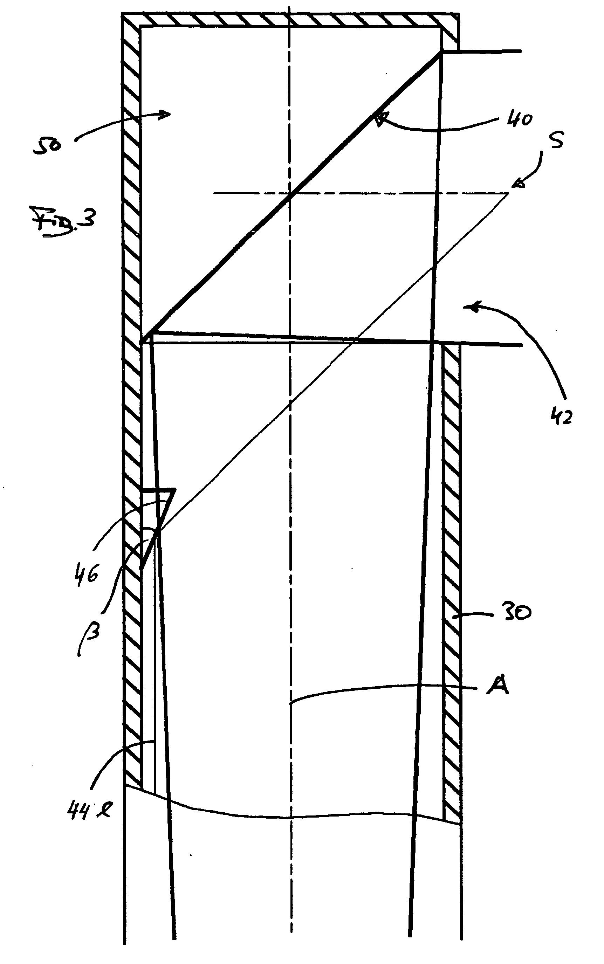

Zu diesem Zweck ist im Gehäuse 36 ein Laser 44 angeordnet, dessen Laserstrahl 441 parallel und mit Abstand zur Innenwand des Messrohrs 30 verläuft und dabei auf einen Spiegel 46 trifft, der in Richtung der Mittenlängsachse A des Messrohrs 30 zwischen Kamera 38 und Reflektionsfläche 40, der Reflektionsfläche 40 benachbart, liegt, wie die Figuren 2, 3 zeigen.

Insbesondere Figur 3 lässt sich weiters entnehmen, dass die ebenfalls plane Oberfläche des Spiegels 46 in einem Winkel β von etwa 23° mit Bezug auf eine Vertikalebene verläuft. Dieser Wert wurde so ausgewählt, dass der am Spiegel 46 reflektierte Laserstrahl auf einen zentralen Flächenabschnitt des von der Kamera 38 erfassten Teils der zylindrischen Oberfläche 18z der Schieberplatte 18 trifft, wobei dieser Punkt in Figur 3 schematisch mit S angegeben ist.

Das Gehäuse 36 umfasst eine (nicht dargestellte) Registriereinheit, die die von der Kamera 38 aufgenommenen Bilder speichert und ebenso die mittels des Lasers 40 registrierten Abstände der Oberfläche 18z der Schieberplatte 18 von der Mittenlängsachse A des Messrohrs 30.

Mittels entsprechender Kalibrierung lässt sich aus den jeweils bestimmten Abstandswerten millimetergenau feststellen, wie groß der Verschleißgrad im Bereich der Oberfläche 18z der Schieberplatte 18 ist, oder anders ausgedrückt: wie groß der Abstand zwischen der ursprünglichen zylindrischen Oberfläche der neuen Schieberplatte und dem jeweiligen Istzustand ausfällt, wobei über Referenzdaten danach vom Rechner und/oder von einer Bedienungsperson entschieden wird, wie viele Chargen die entsprechende Schieberplatte weiter benutzt werden kann beziehungsweise ob/welche Reparaturen oder ein Austausch notwendig sind.

Die Vorrichtung ist so ausgeführt, dass sie auch am heißen Aggregat eingesetzt werden kann. Das heißt, dass die Vorrichtung nach dem Ausfließen der Schmelze aus dem Gefäß 10 gemäß Figur 1 vorzugsweise von unten in die entsprechende Durchgangsbohrung 16 des entsprechenden Bauteils eingeführt wird, bis der Messkopf (Abschnitt 34 am "heißen Ende") im Bereich der zu prüfenden Oberfläche liegt, wie in Figur 2 dargestellt.

Dazu kann die gesamte Vorrichtung am metallurgischen Gefäß fixiert werden, und zwar vorzugsweise so, dass die Mittenlängsachse A des Messrohrs in axialer Verlängerung der idealen Mittenlängsachse der zugehörigen Durchflussöffnung 16 liegt.

Es erfolgt dann eine erste Aufnahme mittels der Kamera 38 und eine erste Lasertriangulation zur Abstandsmessung. Anschließend wird das Messrohr 30 um einen bestimmten Winkel gedreht und/oder um eine bestimmte Strecke axial verschoben, um einen benachbarten Teil der Oberfläche 18z der Schieberplatte 18 zu erfassen. Dieser Vorgang kann beliebig oft und in beliebig großen oder kleinen Teilschritten wiederholt werden, je nachdem, welche Teile der Schieberplattenoberfläche geprüft werden sollen.

Anschließend wird die Vorrichtung wieder abgenommen. Um die Standzeit der Vorrichtung zu erhöhen ist im zweiten Abschnitt 34 vorgesehen, dass das Messrohr 30 innenseitig eine Mineralfaserisolierung aufweist. Darüber hinaus ist der gesamte Hohlraum 50 zwischen Reflektionsfläche 40 und Innenwand des Messrohrs 30 mit Schaumglas ausgefüllt. Die optischen Oberflächen der Reflektionsfläche 40 beziehungsweise des Spiegels 46 sind verchromt.

## Patentansprüche

1. Verfahren zur Erkennung und Vermessung von zylindrischen Oberflächen an feuerfesten keramischen Bauteilen in metallurgischen Anwendungen, mit einer Vorrichtung, die folgende Merkmale aufweist:
1.1 ein Messrohr (30)
1.2 im oder am Messrohr (30) ist eine Kamera (38) angeordnet, deren Objektiv in Richtung auf mindestens eine, im Messrohr (30) angeordnete Reflektionsfläche (40) ausgerichtet ist, wobei
1.3 die Reflektionsfläche (40) im Abstand zum Objektiv und geneigt zur Axialrichtung (A) des Messrohrs (30) verläuft,
1.4 das Messrohr (30) ist in einem der Reflektionsfläche (40) gegenüberliegenden Umfangsabschnitt lichtdurchlässig,
1.5im oder am Messrohr (30) ist eine Einrichtung (44) zur Abstandsmessung angeordnet, wobei
1.6die Kamera (38) bei entsprechender Brennweite zwischen Objektiv und Reflektionsfläche (40) einen in radialem Abstand zum Messrohr (30) verlaufenden Teil der zylindrischen Oberfläche (18z) des benachbarten feuerfesten keramischen Bauteils (18) erfasst, und
1.7mit der Einrichtung der Abstand eines Punktes oder eines Flächenabschnitts auf dem von der Kamera (38) erfassten Teil der zylindrischen Oberfläche (18z) des feuerfesten keramischen Bauteils (18) zu einem festen Bezugspunkt erfasst wird.

2. Verfahren nach Anspruch 1, bei dem die Einrichtung (44) zur Abstandsmessung einen Laser oder eine Diode umfasst, der/die einen optischen Strahl (441) auf einen im Messrohr (30) angeordneten Spiegel (46) richtet, der den Strahl (441) durch den lichtdurchlässigen Umfangsabschnitt (42) des Messrohrs (30) hindurch auf den von der Kamera (38) erfassten Teil der zylindrischen Oberfläche (18z) des keramischen Bauteils (18) lenkt.

3. Verfahren nach Anspruch 1, bei dem die Reflektionsfläche (40) so angeordnet ist, dass Lichtwellen in einem Winkel von 10-80° umgelenkt werden.

4. Verfahren nach Anspruch 1, bei dem die Reflektionsfläche (40) so angeordnet ist, dass Lichtwellen in einem Winkel von 45 +/- 10° umgelenkt werden.

5. Verfahren nach Anspruch 2, bei dem der Spiegel (46) in Axialrichtung (A) des Messrohrs (30) vor der Reflektionsfläche (40) angeordnet wird.

6. Verfahren nach Anspruch 2, bei dem der Spiegel (46) in einem solchen Winkel geneigt zur Axialrichtung (A) des Messrohrs (30) angeordnet wird, dass der reflektierte Lichtstrahl auf einen zentralen Flächenabschnitt des von der Kamera (38) erfassten Teils der zylindrischen Oberfläche (18z) des keramischen Bauteils (18) gelenkt wird.

7. Verfahren nach Anspruch 1 unter Verwendung eines zylindrischen Messrohrs (30).

8. Verfahren nach Anspruch 1 mit einer Vorrichtung, bei der die Reflektionsfläche (40) und/oder der Spiegel (46) auf ihrer optischen Seite eine hitzebeständige Beschichtung aufweisen.

9. Verfahren nach Anspruch 1 mit einer Vorrichtung, bei der die Reflektionsfläche (40) und/oder der Spiegel (46) auf ihrer optischen Seite verchromt sind.

10. Verfahren nach Anspruch 1, bei dem das Messrohr (30) um seine Mittenlängsachse (A) drehbar und/oder axial verschiebbar ist.

11. Verfahren nach Anspruch 1 mit einer Vorrichtung, bei der das Messrohr (30) zumindest in dem Bereich, in dem die Reflektionsfläche (40) und ein etwaiger Spiegel (46) angeordnet sind, thermisch isoliert ausgebildet ist, um Temperaturen bis 800°C zu widerstehen.

12. Verfahren nach Anspruch 1, bei dem die von der Kamera (38) und der Einrichtung (44) zur Abstandsmessung empfangenen Bilder und Daten auf einer Speichereinheit erfasst werden.

13. Verfahren nach Anspruch 1, bei dem die von der Kamera (38) und der Einrichtung (44) zur Abstandsmessung empfangenen Bilder und Daten, gegebenenfalls nach vorheriger Speicherung, ausgewertet werden.

14. Verfahren nach Anspruch 1, bei dem die Vorrichtung an einem metallurgischen Gefäß, an dem das feuerfeste keramische Bauteil (18) angeordnet ist, mit einer Einrichtung fixiert wird.

## Claims

1. Method for the detection and measuring of cylindrical surfaces of fireproof ceramic components in metallurgical applications, with a device which has the following features:
1.1 a measuring pipe (30)
1.2 a camera (38) is arranged inside or on the measuring pipe (30), whose objective is aligned with at least one reflection surface (40) which is arranged inside the measuring pipe (30), wherein
1.3 the reflection surface (40) runs with a distance to the objective and tilted towards the axial direction (A) of the measuring pipe (30),
1.4 the measuring pipe (30) is translucent in a perimeter-segment opposite the reflection surface (40),
1.5 a device (44) for the distance measurement is arranged inside or on the measuring pipe (30), wherein
1.6 the camera (38) captures a segment of the cylindrical surface (18z) of the adjacent fireproof ceramic component (18) which runs in a radial distance to the measuring pipe (30), at a corresponding focal length between the objective and the reflection surface (40), and wherein
1.7 the distance of a point or an area segment on a part of the cylindrical surface (18z) of the fireproof ceramic component (18) captured by the camera (38) to a fixed reference point is determined by said device.

2. Method according to claim 1, wherein the device (44) for the distance measurement includes a laser or a diode which directs an optical beam (44I) onto a mirror (46) which is arranged in the measuring pipe (30), which then directs the beam through the translucent perimeter segment (42) of the measuring pipe (30) towards the part of the cylindrical surface (18z) of the ceramic component (18) which is captured by the camera (38).

3. Method according to claim 1, wherein the reflection surface (40) is arranged in such a way that light waves are redirected in an angle of 10-80°.

4. Method according to claim 1, wherein the reflection surface (40) is arranged in such a way that light waves are redirected in an angle of 45 +/- 10°.

5. Method according to claim 2, wherein the mirror (46) is arranged in the axial direction (A) of the measuring pipe (30) in front of the reflection area (40)

6. Method according to claim 2, wherein the mirror (46) is arranged in such an angle to the axial direction (A) of the measuring pipe (30) that the reflected light beam is redirected towards a central area segment of the part of the cylindrical surface (18z) of the ceramic component (18) which is captured by the camera (38).

7. Method according to claim 1 with use of a cylindrical measuring pipe (30).

8. Method according to claim 1 with a device, wherein the reflection area (40) and/or the mirror (46) feature a heat-proof coating on their optical side.

9. Method according to claim 1 with a device, wherein the reflection surface and/or the mirror (46) are chromed on their optical side.

10. Method according to claim 1, wherein the measuring pipe (30) is rotatable and/or axially movable along its central longitudinal axis (A) .

11. Method according to claim 1 with a device, wherein the measuring pipe (30) is thermally insulated at least in the area in which the reflection surface (40) and a possible mirror (46) are arranged, in order to resist temperatures of up to 800°C.

12. Method according to claim 1, wherein the data and images received from the camera (38) and from the device (44) for the distance measurement are captured by a memory-unit.

13. Method according to claim 1, wherein the data and images received from the camera (38) and from the device (44) for the distance measurement, if applicable after a previous saving, are analysed.

14. Method according to claim 1, wherein the device is fixed with an apparatus to a metallurgic vessel, on which the fireproof ceramic component (18) is arranged.

## Revendications

1. Procédé de reconnaissance et de mesure de surfaces cylindriques sur des composants céramiques réfractaires dans des applications métallurgiques, comportant un dispositif, qui présente les caractéristiques suivantes :
1.1 un tube de mesure (30),
1.2 dans ou sur le tube de mesure (30) est disposée une caméra (38), dont l'objectif est orienté dans la direction d'au moins une surface de réflexion (40) disposée dans le tube de mesure (30), dans lequel
1.3 la surface de réflexion (40) s'étend en espacement par rapport à l'objectif et en inclinaison par rapport à la direction axiale (A) du tube de mesure (30),
1.4 le tube de mesure (30) est perméable à la lumière dans une portion circonférentielle en vis-à-vis de la surface de réflexion (40),
1.5 dans ou sur le tube de mesure (30) est disposé un dispositif (44) de mesure d'espacement, dans lequel
1.6 la caméra (38) détecte en présence d'une distance focale correspondante entre l'objectif et la surface de réflexion (40) une partie s'étendant en espacement radial par rapport au tube de mesure (30) de la surface cylindrique (18z) du composant céramique (18) réfractaire voisin, et
1.7 avec le dispositif, l'espacement d'un point ou d'une portion de surface sur la partie détectée par la caméra (38) de la surface cylindrique (18z) du composant céramique ignifuge (18) est détecté par rapport à un point de référence fixe.

2. Procédé selon la revendication 1, dans lequel le dispositif (44) de mesure d'espacement comprend un laser ou une diode, qui aligne un faisceau optique (441) sur un miroir (46) disposé dans le tube de mesure (30), qui dirige le faisceau (441) à travers la portion circonférentielle (42) perméable à la lumière du tube de mesure (30) sur la partie détectée par la caméra (38) de la surface cylindrique (18z) du composant céramique (18).

3. Procédé selon la revendication 1, dans lequel la surface de réflexion (40) est disposée de telle sorte que les ondes lumineuses soient déviées dans un angle compris entre 10 et 80°.

4. Procédé selon la revendication 1, dans lequel la surface de réflexion (40) est disposée de telle sorte que les ondes lumineuses soient déviées dans un angle de 45 ± 10°.

5. Procédé selon la revendication 2, dans lequel le miroir (46) est disposé dans la direction axiale (A) du tube de mesure (30) avant la surface de réflexion (40).

6. Procédé selon la revendication 2, dans lequel le miroir (46) est disposé dans un angle incliné par rapport à la direction axiale (A) du tube de mesure (30), de telle sorte que le faisceau lumineux réfléchi sur une portion de surface centrale de la partie détectée par la caméra (38) de la surface cylindrique (18z) du composant céramique (18) soit dévié.

7. Procédé selon la revendication 1 en utilisant un tube de mesure cylindrique (30).

8. Procédé selon la revendication 1 comportant un dispositif, dans lequel la surface de réflexion (40) et/ou le miroir (46) présentent un revêtement résistant à la chaleur sur leur face optique.

9. Procédé selon la revendication 1 comportant un dispositif, dans lequel la surface de réflexion (40) et/ou le miroir (46) sont chromés sur leur face optique.

10. Procédé selon la revendication 1, dans lequel le tube de mesure (30) est rotatif et/ou coulissable axialement autour de son axe longitudinal central (A).

11. Procédé selon la revendication 1 comportant un dispositif, dans lequel le tube de mesure (30) est conçu de manière isolée thermiquement au moins dans la zone, dans laquelle la surface de réflexion (40) et un quelconque miroir (46) sont disposés, afin de résister à des températures allant jusqu'à 800°C.

12. Procédé selon la revendication 1, dans lequel les images et les données reçues par la caméra (38) et le dispositif (44) de mesure d'espacement sont saisies sur une unité de mémoire.

13. Procédé selon la revendication 1, dans lequel les images et données reçues par la caméra (38) et le dispositif (44) de mesure d'espacement sont évaluées, le cas échéant après une mémorisation préalable.

14. Procédé selon la revendication 1, dans lequel le dispositif est fixé sur un support métallurgique, sur lequel le composant céramique réfractaire (18) est disposé, avec un équipement.
